# EUROPEAN PATENT SPECIFICATION

(11) **EP 2 645 778 B1**
(45) Date of publication and mention of the grant of the patent: **31.07.2019**
(21) Application number: 13161169.1
(22) Date of filing: 26.03.2013
(51) Int. Cl.: H04W 48/00, H04W 8/24, H04W 12/08, H04W 8/20

(54) **System and method for automated provisioning of a wireless device**
Verfahren und System zur automatisierten Bereitstellung einer drahtlosen Vorrichtung
Système et procédé pour la fourniture sécurisée d'un dispositif sans fil

(30) Priority: 29.03.2012 IN CH12152012
(43) Date of publication of application: 02.10.2013
(73) Proprietor: General Electric Company, Schenectady, NY 12345 (US)
(72) Inventor: Kekan, Kedar Valmik, 560066 Bangalore, Karnataka (IN); Grubis, Matthew George, Milwaukee, WI Wisconsin 53223 (US); Pekarske, Matthew Richard, Milwaukee, WI Wisconsin 53223 (US)
(74) Representative: Fennell, Gareth Charles

(56) References cited:
- DROMS R ET AL: "Authentication for DHCP Messages; rfc3118.txt", 20010601, 1 June 2001 (2001-06-01), XP015008899, ISSN: 0000-0003
- DROMS BUCKNELL UNIVERSITY R: "Dynamic Host Configuration Protocol; rfc2131.txt", 19970301, 1 March 1997 (1997-03-01), XP015007915, ISSN: 0000-0003

## Description

The subject matter disclosed herein relates to provisioning of a wireless device. More specifically relates to, a system and method for automated provisioning of a wireless device.

DROMS R ET AL: "Authentification for DHCP Messages", Network Working Group, Request for Comments, June 2001 defines a technique using a protocol combining the Schiller-Huitema-Droms authentication mechanism with a "delayed authentication" proposal. The "delayed authentication" protocol does not attempt to address situations where a client may roam from one administrative domain to another, i.e. interdomain roaming. The "delayed authentication " protocol is focused on solving the intradomain problem.

Provisioning involves preparing and equipping a network to provide new services to users of the network. So provisioning a device means preparing the device to access some services provided by a network in which the device operates. For example a device entering a wireless network needs to be provisioned to use any service offered by the wireless network. A service may be for example, accessing a database in the wireless network. In order to prepare the wireless device, a configuration file associated with a service offered by the wireless network may be installed in the wireless device. The configuration file includes settings information for configuring the wireless device to communicate with the wireless network for accessing the service. The settings information may include, network settings, security settings etc. The configuration file may be manually installed into the wireless device by a network administrator. Thereafter the wireless device is configured to access the services provided by the wireless network.

For example when a wireless device moves from one location to another, the wireless device needs to connect with a server or a wireless network present in the current location. In order to use the services offered by the wireless network the wireless device needs to receive configuration settings specific to a server and a network infrastructure in the location. The configuration settings are usually configured in the wireless device in the manual manner by a network administrator. The process of manually configuring the wireless device becomes cumbersome and time consuming. Therefore there is a need for a system for provisioning a wireless device in an efficient manner.

The above-mentioned shortcomings, disadvantages and problems are addressed herein which will be understood by reading and understanding the following specification.

The present invention is defined in the accompanying claims.

In an embodiment, a processor for automated provisioning of one or more wireless devices. The processor includes one or more processing subsystems communicably coupled to a guest network. The processing subsystems are configured to receive one or more input data signals corresponding to a service request from the wireless devices within the guest network. The service request may be to connect to a secured backend network. The input data signals include multiple service connection parameters associated with the wireless devices. The processing subsystems authenticate the multiple service connection parameters with pre-stored data in one or more memory. The input data signals are processed upon authentication to establish a secured communication link with the wireless devices. Thereafter multiple output signals corresponding to the service request are transferred to the wireless devices for automated provisioning to establish a connection with the secured backend network.

In another embodiment, a system for automated provisioning. The system includes one or more wireless devices configured to transmit one or more output data signals corresponding to a service request within a guest network. The output data signals include multiple service connection parameters associated with the wireless devices. The system also includes a processing subsystem configured to receive the output data signals corresponding to the service request from the wireless devices to connect to a secured backend network. The processing subsystem authenticates the service connection parameters with a pre-stored data stored in one or more memory. The output data signals may be processed upon authentication to establish a secured communication link with the wireless devices. Subsequently multiple output signals corresponding to the service request are send to the wireless devices for automated provisioning to establish a connection with the secured backend network.

In still another embodiment, a method of automated provisioning of one or more wireless devices. The method involves receiving one or more input data signals corresponding to a service request from the wireless devices within a guest network to connect to a secured backend network. The input data signals includes multiple service connection parameters associated with these wireless devices. The service connection parameters are then authenticated with a pre-stored data. The input data signals are then processed upon authentication to establish a secured communication link between the wireless devices and one or more processing sub-systems. Multiple output signals corresponding to the service request are then transferred to the wireless devices for automated provisioning to establish a connection with the secured backend network.

Various other features, objects, and advantages of the invention will be made apparent to those skilled in the art from the accompanying drawings and detailed description thereof.
FIGURE 1 is a schematic illustration of an exemplary environment where one or more embodiments of the invention may operate in accordance with an embodiment;
FIGURE 2 is a schematic illustration of a processor for automated provisioning of one or more wireless devices in accordance with an embodiment;
FIGURE 3 is a schematic illustration of a system including a processing subsystem present in the processor of FIGURE 2 for automated provisioning of one or more wireless devices in accordance with an embodiment;
FIGURE 4 is a schematic illustration of a wireless device present within the system of FIGURE 3 moving from one location to another location in accordance with an embodiment;
FIGURE 5 is a schematic illustration of an exemplary operating environment in which an automation server for automated provisioning of one or more wireless devices may operate in accordance with an embodiment;
FIGURE 6 illustrates a data flow diagram for automated provisioning of a wireless device in accordance with an embodiment;
FIGURE 7 is a schematic illustration of a packet structure of a service request send by a wireless device in accordance with an embodiment;
FIGURE 8 is a schematic illustration of a packet structure of a service response (a positive response) send by an automation server to the wireless device in accordance with an embodiment;
FIGURE 9 is a schematic illustration of a packet structure of a service response (a negative response) send by the automation server to the wireless device in accordance with an embodiment;
FIGURE 10 is a schematic illustration of a packet structure of a probe request send by the wireless device in accordance with an embodiment;
FIGURE 11 is a schematic illustration of a packet structure of a probe response (a positive response) send by the automation server to the wireless device in accordance with an embodiment;
FIGURE 12 is a schematic illustration of a packet structure of a probe response (a negative response) send by the automation server to the wireless device in accordance with an embodiment;
FIGURE 13 is a schematic illustration of a packet structure of an acknowledgement request send by the wireless device to the automation server in accordance with an embodiment; and
FIGURE 14 is a schematic illustration of a method for automated provisioning of one or more wireless devices in accordance with an embodiment.

In the following detailed description, reference is made to the accompanying drawings that form a part hereof, and in which is shown by way of illustration specific embodiments that may be practiced. These embodiments are described in sufficient detail to enable those skilled in the art to practice the embodiments, and it is to be understood that other embodiments may be utilized and that logical, mechanical, electrical and other changes may be made without departing from the scope of the embodiments. The following detailed description is, therefore, not to be taken as limiting the scope of the invention.

As discussed in detail below, embodiments of the invention include a system and a method for automated provisioning of one or more wireless devices. The system includes one or more wireless devices within a guest network and a processing subsystem. The wireless devices transmit one or more output data signals corresponding to a service request within the guest network. The output data signals include multiple service connection parameters associated with the wireless devices. The processing subsystem receives the output data signals corresponding to the service request from the wireless devices. The service request may be for the wireless devices to connect to a secured backend network. The service connection parameters are authenticated with a pre-stored data stored in one or more memory. Once authenticated, the output data signals may be processed to establish a secured communication link with the wireless devices. Thereafter multiple output signals corresponding to the service request are send to the wireless devices for provision the wireless devices in an automated manner. The wireless devices when provisioned establish a connection with the secured backend network.

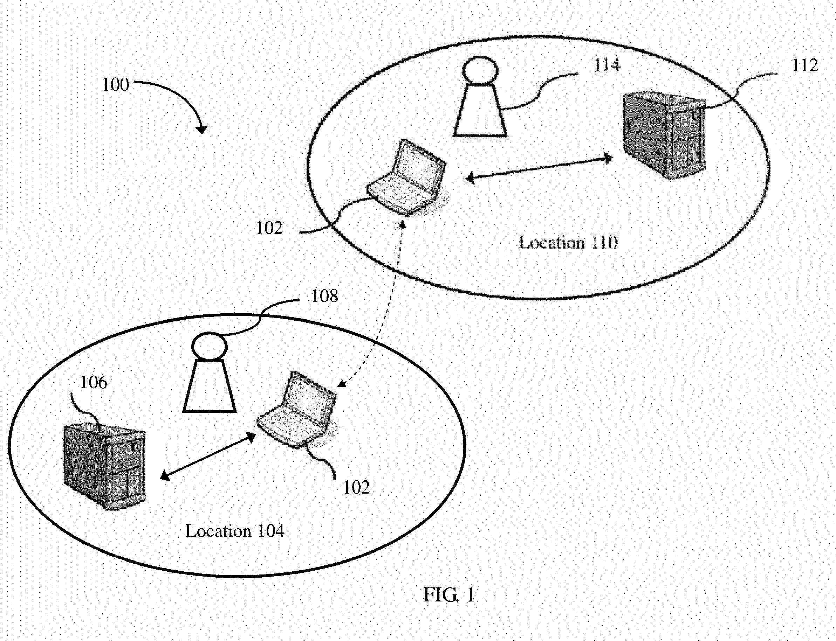

FIG. 1 is a schematic illustration of an exemplary environment 100 where one or more embodiments of the invention may operate in accordance with an embodiment. The environment 100 may include a client device 102 present in a location 104 communicably connected to a server 106. The client device 102 may have wireless or wired communication capability. The client device 102 may include but are not limited to, a computing device, a laptop and a mobile device. The server 106 may include but are not limited to a web server, a database server, a file server, a mail server and an application server. The client device 102 may be connected over a network to the server 106. The network is not illustrated in FIG. 1 for sake of convenience of illustration. The network may be a Wireless Local Area Network (WLAN), a Wireless Wide Area Network (Wireless WAN), Wireless Personal Area Network (Wireless PAN), a Wireless Metropolitan Area Network (Wireless MAN), a Wireless Telecommunication Network or any other wireless networks known in the art. The wireless network may use various wireless technologies such as but are not limited to, 802.11 WLAN, Bluetooth®, Zigbee® and a Wireless Medical Telemetry Service (WMTS).

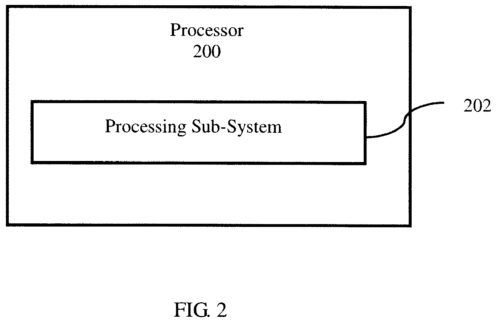

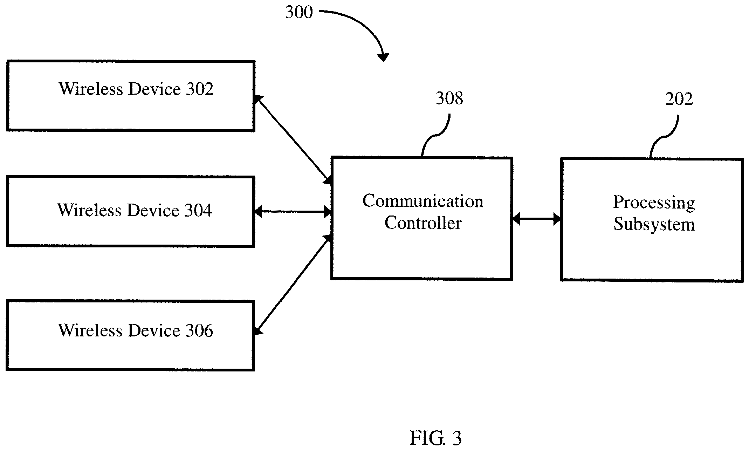

The client device 102 may communicate with the server 106 for using any services provided by the server 106. The services may include for example, accessing a database in the network, accessing a network, accessing the web and accessing any applications etc. To communicate with the server 106, the client device 102 may need to be provisioned to access the server 106 within the network. The process of provisioning may involve installing a service configuration associated with the network in the client device 102 for setting the client device 102 to communicate with the server 106. The service configuration may include settings information for example but are not limited to application settings, network settings, security settings etc. The service configuration may be installed in the client device 102 by a network administrator 108. The client device 102 may move to a different location such as, a location 110 and may need to access a network present in the location 110. The network may be different as compared to the network present in the location 104. In this case as the client device 102 is already programmed or provisioned to operate in the location 104 the client device 102 may need to be re-provisioned to communicate with the network on location 110. The re-provisioning may be performed by installing a service configuration associated with the network in the location 110. The service configuration once installed enables the client device 102 to access the network and communicate with a server 112. The server 112 may be similar to the server 106 or any other server providing services to the client device 102. The service configuration may need to be installed in the client device 102 by a network administrator 114 in the location 110. Thus when the client device 102 moves from one location to another location the client device 102 may need to be manually provisioned each time to access different networks in different locations. The manual re-provisioning or provisioning of a client device may be laborious and time consuming. Hence the in accordance with one or more embodiments of the invention a processor and a system for automated provisioning of the one or more wireless devices and this system is described with respect to FIGs. 2 and 3.

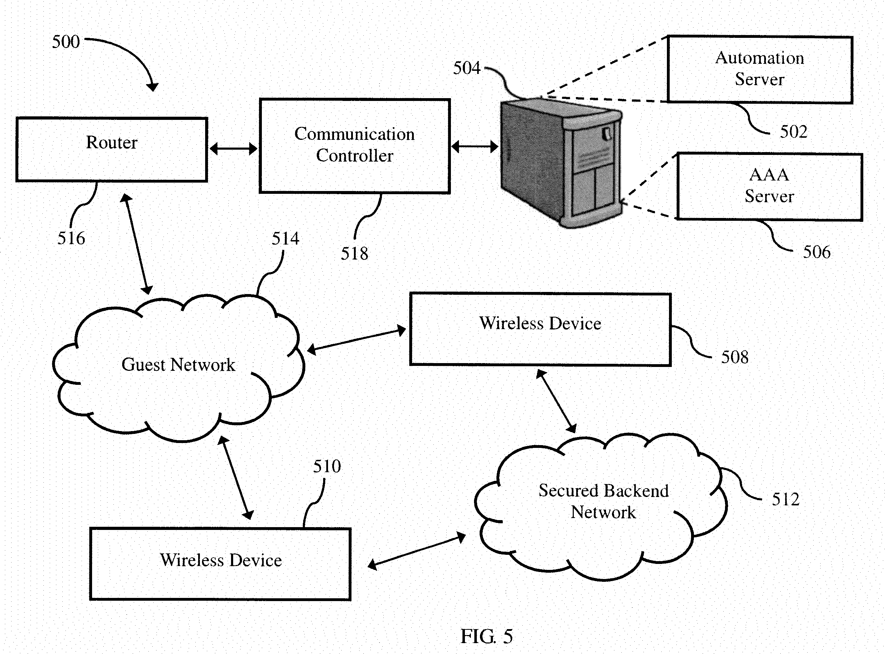

FIG. 2 is a schematic illustration of a processor 200 for automated provisioning of one or more wireless devices in accordance with an embodiment. The processor 200 includes one or more processing subsystems such as, a processing subsystem 202. The processing subsystem 202 may be communicably coupled to a guest network (described in detail in conjunction with FIG. 5). The guest network includes the one or more wireless devices. Even though the wireless devices are referred as capable of communicating using a wireless connection, the wireless devices may also be capable of communicating through a wired connection. The guest network may be a temporary network that may be accessible to the wireless devices. In an embodiment the guest network may be capable of providing services for automated provisioning of the wireless devices. However the guest network may not provide other services such as, Internet, connectivity to any backend network. The processing subsystem 202 is configured to receive one or more input data signals corresponding to a service request from the wireless devices. An input data signal corresponds to a service request for connecting to a secured backend network. The secured backend network may be a network available based on request or subscription and not available for public. The secured backend network may include for example but are not limited to a hospital network, a bank network and a private network.

The input data signals include multiple service connection parameters associated with the wireless devices. The multiple service connection parameters may include one or more device identification parameters and a request type. The device identification parameters may be for example but not limited to a unique device identification key, a device serial number, and a device Media Access Control (MAC) Address. Further the request type indicates a service that the wireless device requires. The service request is for connecting the wireless device to the secured backend network. In an embodiment a service connection parameter may be length of an input data signal. The input data signals are further explained in detail in conjunction with FIGs. 2, 3 and 6. In an embodiment the input data signals may include one or more communication parameters associated with the wireless devices. A communication parameter may be associated with communication capability of a wireless device. For example a communication parameter may indicate a wireless communication capability of a wireless device. However the communication parameters may indicate any parameters related to communication capabilities of the wireless device.

The processing subsystem 202 then authenticates the service connection parameters with pre-stored data. The pre-stored data includes multiple device identification parameters associated with the wireless devices, and request types. The pre-stored data may be stored in one or more memory. The one or more memory may be of the processor 200. In an embodiment the one or more memory may be external to the processor 200. For example, one or more service connection parameters received from a wireless device include unique device identification key, a device serial number, a communication parameter and a device MAC address associated with the wireless device. The service connection parameters may be compared with a multiple device identification parameters associated with each wireless device and request types to authenticate the wireless device. In case a wireless device is not found authentic then in an embodiment the processing subsystem 202 may mark this unauthorized access by flagging an input signal or a request received from the wireless device. Further in an embodiment the processing subsystem 202 may also mark multiple input signals or requests received from the wireless device. Such marked input signals may be notified to a network administration by the processing subsystem 202. Furthermore the processing subsystem 202 may also store the number of times the input signals or requests send by wireless device.

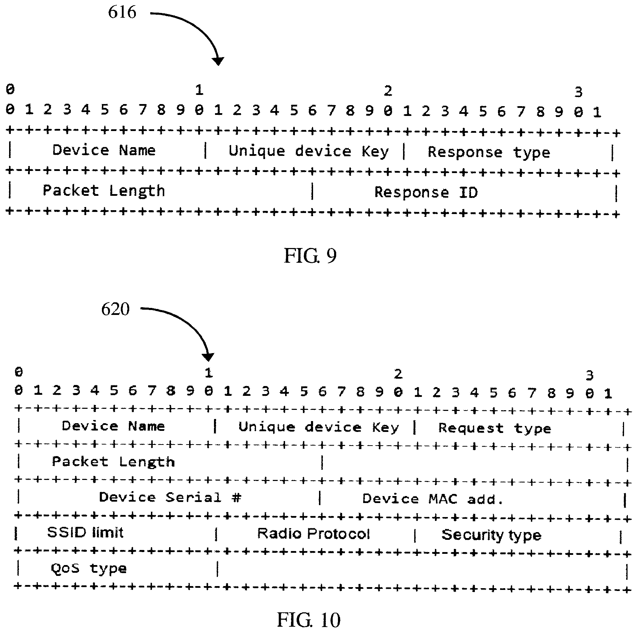

Once the authentication is performed the processing subsystem 202 processes the input data signals to establish a secured communication link with the wireless devices. The secured communication link may be a wireless connection. The processing subsystem 202 may receive a probe request from the wireless devices. The probe request may include information associated with wireless capabilities of the wireless devices. This explained in detail in conjunction with FIG. 10. Thereafter multiple output signals corresponding to the service request is transferred to the wireless devices. The multiple output signals are transferred to automatically provision the wireless devices for establishing a connection with the secured backend network. The output signals includes one or more service configurations associated with the wireless devices. A service configuration needs to be installed in a wireless device for provisioning the wireless device for connecting to the secured backend network. The service configuration may include but are not limited to network settings, application settings, security settings, and Quality of Service (QoS) settings that enables the wireless device to connect to the secured back end network. The service configuration is transferred to the wireless device and this is automatically installed into the wireless device without any user or administrator intervention. Thereafter the wireless device establishes connection with the secured backend network.

In an embodiment before transferring the service configurations, the processing subsystem 202 may be configured to determine whether the service configurations are compatible with the communication parameters associated with the wireless devices. The service configurations may be identified from multiple service configurations. The multiple service configurations may be pre-stored. In a scenario the processing subsystem 202 may be configured to notify the wireless devices whether the one or more service configurations are compatible with the communication parameters.

For example a communication parameter associated with a wireless device is initially received. The communication parameter indicates that the wireless device have a type of wireless communication capability. Then a service configuration may be selected from multiple service configurations. In order to select the service configuration, each service configuration is compared with the received communication parameter. Then the service configuration compatible with the communication parameter is selected. The selected service configuration may be for the wireless capable device having the type of wireless communication capability indicated by the communication parameter. Now in case none of the service configurations are found compatible with the communication parameter then this may be notified to the wireless device.

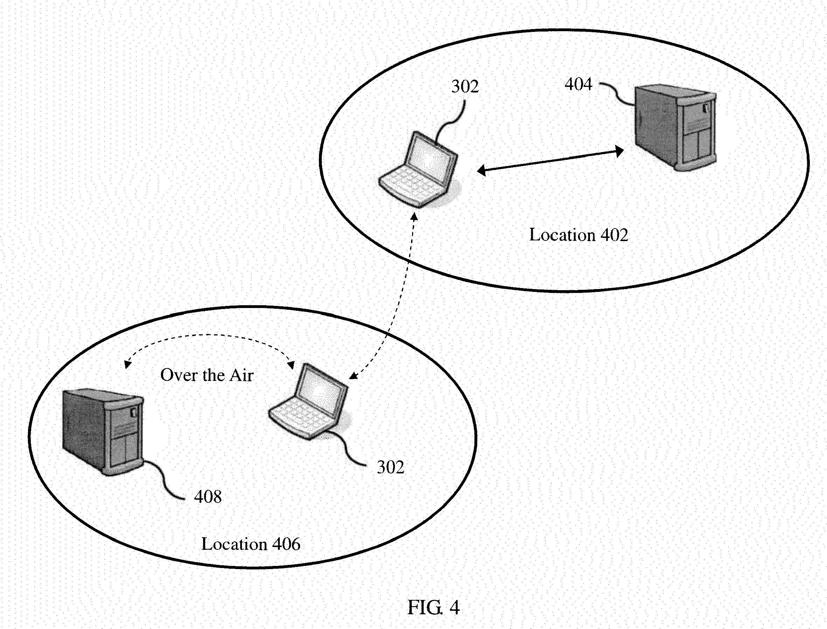

Now turning to FIG. 3, FIG. 3 is a schematic illustration of a system 300 for automated provisioning of one or more wireless devices in accordance with an embodiment. The system 300 includes the processing subsystem 202 that automatically provisions the one or more wireless devices. The one or more wireless devices may include a wireless device 302, a wireless device 304 and a wireless device 306. These wireless devices may be similar to the one or more wireless devices explained in conjunction with FIG. 2. The number of wireless devices that are part of the system 300 may vary because a wireless device may be mobile and move from one location to another. The wireless devices are configured to transmit one or more output data signals corresponding to a service request to the processing subsystem 202. The output data signals may be transmitted over a guest network (not shown in FIG. 3 for sake of convenience of illustration). The guest network may be similar to the guest network already explained in conjunction with FIG. 2 and this will be further explained in detail in conjunction with FIG. 4. The output data signals include multiple service connection parameters associated with the wireless devices. These service connection parameters may include one or more device identification parameters and a request type. The device identification parameters may be for example but are not limited to a unique device identification key, a device serial number, and a device Media Access Control (MAC) Address. Further the request type indicates a service that the wireless device requires.

In an embodiment the output data signals may include one or more communication parameters associated with the wireless devices. A communication parameter may be associated with communication capability of a wireless device. For example a communication parameter may indicate a wireless communication capability of a wireless device 302. However the one or more communication parameters may indicate any parameters related to communication capabilities of the wireless device 302. The output data signals are received by the processing subsystem 202. In order to receive the output data signals the wireless devices need to establish a connection with the processing subsystem 202. Explaining in another way the output data signals may be send to the wireless devices only when the connection is established.

To this end, requests may be sent by the wireless devices to a communication controller 308 for connecting to the processing subsystem 202. The requests may be send over the guest network. The communication controller 308 may be communicably connected to the processing subsystem 202. The connection between the communication controller 308 and the processing subsystem 202 may be a wired connection. The communication controller 308 receives and processes the request to establish a connection between the wireless devices and the processing subsystem 202. This connection may be established in such a way that all information communicated to the processing subsystem 202 by the wireless devices may be routed through the communication controller 308. Further the connection between the wireless devices and the communication controller 308 may be different from the connection between the communication controller 308 and the processing subsystem 202. Moreover the connection between the wireless devices and the communication controller 308 may be a wireless connection and the connection between the communication controller 308 and the processing subsystem 202 may be a wired connection. Thus the processing subsystem 202 may not be directly accessible to end users such as users of the wireless devices thereby mitigating security threats or security attacks of the processing subsystem 202.

In an embodiment the connection between the wireless devices and the processing subsystem 202 may be established using a Service Set Identification (SSID) associated with the guest network. The SSID may be but not limited to a generic SSID, an open SSID and a guest SSID. The communication controller 308 may assign one or more SSIDs to the wireless devices. In an embodiment the communication controller 308 may assign one or more generic SSIDs to the wireless devices. The communication controller 308 may be capable of hosting 32 Generic SSIDs in a network. The generic SSIDs may be protected by various security applications such as but not limited to, Wired Equivalent Privacy (WEP) and Wi-Fi® Protected Access (WPA) Pre-Shared Key (PSK). The information associated with the security applications of the generic SSID and the generic SSID may be prestored.

In an embodiment a generic SSID may be capable of providing automatic connection capability to the wireless devices for connecting to the guest network. For example, when a wireless device 302 enters a location the wireless device 302 may be able to automatically connect to the guest network using a generic SSID allocated by the communication controller 308. Thus in this location the wireless device 302 may monitor whether it is connected to a secured network. In case the wireless device 302 is not connected to the secured network then the wireless device 302 may use the generic SSID to connect to the guest network. The generic SSID may be allocated along with a pre-shared key for establishing the connection. The pre-shared key may not be known to a user of the wireless device 302.

In another embodiment the communication controller 308 may assign guest SSIDs to the wireless devices. A guest SSID may be allocated when a wireless device such as, a wireless device 302 enters the guest network. In this case the wireless device 302 may be considered as a guest to the guest network. The guest SSID may enable the wireless device 302 to automatically connect to the guest network and then finally to the processing subsystem 202. While using the guest SSID the wireless device 302 may prompt for any key or password to be entered for establishing the connection. The guest SSID may be re-used by any other wireless devices once the wireless device 302 currently using the guest SSID disconnects. Thus the guest SSID may provide other services such as, Internet to the wireless devices. The network infrastructure administrator may define whether the guest SSID can provide such services. In this case additional security provisions may be provided so that unauthorized access to the secured backend network is eliminated.

In yet another embodiment the wireless devices may be allocated one or more open SSIDs. In this case when a wireless device such as, a wireless device 302 enters the vicinity of the guest network the wireless device 302 may be connected to the guest network automatically without requiring a key or a password. Further it may be appreciated that the communication controller 308 may allocate a combination of different SSIDs such as a generic SSID, a guest SSID and an open SSID to the wireless device 302. For example the wireless device 302, the wireless device 304 and the wireless device 306 may be allocated a generic SSID, a guest SSID and an open SSID respectively.

When the connection is established between the wireless devices and the processing subsystem 202, the wireless devices may transmit the output data signals as discussed earlier. The processing subsystem 202 processes the output data signals associated with the service request for connecting to a secured backend network. The output data signals are processed by authenticating the multiple service connection parameters with pre-stored data. The pre-stored data may be present in one or more memory. The one or more memory may be part of the processing subsystem 308 or may be external to the processing subsystem 202. The pre-stored data includes multiple device identification parameters associated with multiple wireless devices, and request types. The pre-stored data may be stored in the one or more memory. For example, one or more service connection parameters received from a wireless device 302 may include unique device identification key, a device serial number, a communication parameter and a device MAC address. The one or more service connection parameters may be compared with multiple device identification parameters associated with each wireless device of the wireless devices and request types to authenticate the wireless device 302. Similarly one or more output data signals received from the wireless device 304 and the wireless device 306 are authenticated. Thereafter the processing subsystem 308 establishes a connection with all these wireless devices. In an embodiment the processing subsystem 308 may receive a probe request from these wireless devices. The probe request may include information associated with wireless capabilities of the wireless devices. This explained in detail in conjunction with FIG. 10.

The processing subsystem 202 transfers multiple output signals corresponding to the service request to the wireless devices for automated provisioning. These output signals include one or more service configurations for automated provisioning of the wireless devices. These service configurations may be installed in the wireless devices in order to connect with the processing subsystem 202.

Prior to transferring the multiple output signals, the processing subsystem 308 determines whether the service configurations are compatible with the communication parameters. In another way initially the processing subsystem 202 identifies the service configurations from multiple service configurations pre-stored. These service configurations may be pre-stored by a network administrator. Here the processing subsystem 202 compares each service configuration with a communication parameter associated with each wireless device. Thereafter the service configurations that are compatible are identified. Subsequently the service configurations are send as part of the multiple output signals to the wireless devices. The service configurations are explained in conjunction with FIG. 2.

In an embodiment the processing subsystem 202 may be configured to notify the wireless devices whether any service configuration compatible with communication parameters associated with the wireless devices. The wireless devices may be notified using any techniques known in the art.

Thus a system such as system 300 enables a wireless device entering a location to be automatically provisioned for accessing a secured backend network in the location. For instance the wireless device 302 may be present in a location 402 as illustrated in FIG. 4. The wireless device 302 may be capable of accessing a service provided by a server 404 and may move to a location 406. The server 404 includes a processing subsystem similar to the processing subsystem 202 as described in conjunction with FIGs. 2 and 3. The wireless device 302 may be initially provisioned to have a communication with the server 404 by the processing subsystem. In the location 406 the wireless device 302 needs to be provisioned to access a service provided by a server 408. The server 404 may also include a processing subsystem similar to the processing subsystem 202. The wireless device 302 may be automatically provisioned over the air upon entering the location 406 by the processing subsystem. In an embodiment a single server including the processing subsystem may be capable of automatically provisioning the wireless device 302 in the location 402 and location 406. As a result the wireless device 302 may be conveniently connected to the server 408 in an efficient manner.

Now an exemplary operating environment 500 in which an automation server 502 for automated provisioning of one or more wireless devices may operate is schematically illustrated in FIG. 5. The exemplary operating environment 500 includes a server 504 comprising the automation server 502 and an Authentication, Authorization and Accounting (AAA) server 506. The automation server 502 represents a processing subsystem such as the processing subsystem 200 described in conjunction with FIGs. 2 and 3. Thus the automation server 502 performs all the processes as performed by the processing subsystem 200. The automation server 502 and the AAA server 506 may be located in different physical server machines. The automation server 502 may be configured to automate the provisioning of one or more wireless devices such as, a wireless device 508 and a wireless device 510. The one or more wireless devices may be automatically provisioned in order to access a secured backend network 512. The secured backend network 512 may be but not limited to, a hospital network, a bank network and a private network.

To be provisioned the wireless devices may transmit a request to connect to the automation server 504. The request may be transmitted when the wireless devices are in the vicinity of a network 514. The network 514 may be guest or generic or open network. A network topology of the exemplary operating environment 500 may be arranged in a manner that the network 514 is isolated from the secured backend network 512. The request is initially received at a router 516 and then transmitted to a communication controller 518. The router 516 may have wired and wireless communication capabilities. The wireless technologies that may be used by the router 516 may be for example, 802.11 WLAN, Bluetooth®, Zigbee®, WMTS etc. The communication controller 518 may be similar to the communication controller 308 explained in FIG. 3. The communication controller 518 receives the request and then allocates one or more SSIDs to the wireless devices. For example, the wireless device 508 and the wireless device 510 may be allocated different SSIDs available with the communication controller 518. The SSIDS may be associated with the network 514. An SSID may be one of a generic SSID, an open SSID and a guest SSID. The connection between the wireless devices and the communication controller 518 is established when the SSIDs are allocated.

The wireless devices then send one or more output data signals to the automation server 502 through the communication controller 518. Here the output data signals are transmitted through the router 516 and the communication controller 518 in order to be received at the automation server 502. The output data signals include multiple service connection parameters associated with the wireless devices. The service connection parameters may include one or more device identification parameters and a request type. The device identification parameters may be for example a unique device identification key, a hash key, a device serial number, a device Media Access Control (MAC) Address etc. The hash key may be obtained from the device serial number and the device MAC address using a hashing algorithm. Further the request type indicates a service that the wireless device requires. This is explained in detail in conjunction with FIG. 3.

The automation server 502 authenticates the output data signals with pre-stored data. The pre-stored data may be stored in the server 504. In an embodiment the pre-stored data may be stored in an external database connected to the server 504. The pre-stored data may include multiple device identification parameters associated with a plurality of wireless devices, and request types. The pre-stored data is similar to the pre-stored data explained in conjunction with FIGs. 2 and 3. In an embodiment the AAA server 506 may perform other authentication processes known in the art for authenticating the output data signals. The AAA server 506 may perform authentication based on a type of security associated with the network 514. In this scenario the type of security may be an Enterprise based Wireless Security. In response to authentication the automation server 502 establishes a connection with the wireless devices. Thereafter the automation server 502 transfers one or more service configurations to the wireless devices.

Prior to transferring the multiple output signals, the output signals are processed by determining whether the service configurations are compatible with the communication parameters. In another way initially the automation server 502 identifies the service configurations from multiple service configurations pre-stored. The multiple service configurations may be pre-stored in the server 504 by a network administrator. The automation server 502 compares each service configuration with a communication parameter associated with each wireless device. Thereafter the service configurations that are compatible are identified. This eliminates the possibility of using an incorrect service configuration that may usually get selected while manually configuring a service configuration in a wireless device thereby reducing the delay time.

Subsequently the service configurations are transferred as part of the multiple output signals to the wireless devices. The service configurations are received and automatically installed in the wireless devices to provision the wireless devices to connect to the secured backend network 512. Thus when a wireless device is moved from one location to another then the wireless device may be automatically provisioned to access a secured backend network of a facility in the new location. These eliminate a need of a person or a network administrator to manually provision or configure a service configuration in the wireless device for accessing the secured backend network.

Explaining by way of an example, a wireless device 508 and the wireless device 510 may send requests to an automation server to establish a connection with a secured backend network provided by a healthcare facility. Such requests may be send when the wireless device 508 and the wireless device 510 are located within a network of the healthcare facility. In this case the wireless devices 508 and the wireless device 510 may be healthcare equipments. The connection between the wireless device 508 and the automation server may be established using a generic SSID. Whereas the connection between the wireless device 510 and the automation server may be established using a guest SSID. Once the connections are established the automation server sends service configurations to the wireless device 508 and the wireless device 510 based on a communication capability associated these wireless devices. These service configurations are automatically configured in the wireless device 508 and the wireless device 510 for establishing a connection with the secured backend network. Thereafter the wireless device 508 and the wireless device 510 may use services offered by the secured backend network.

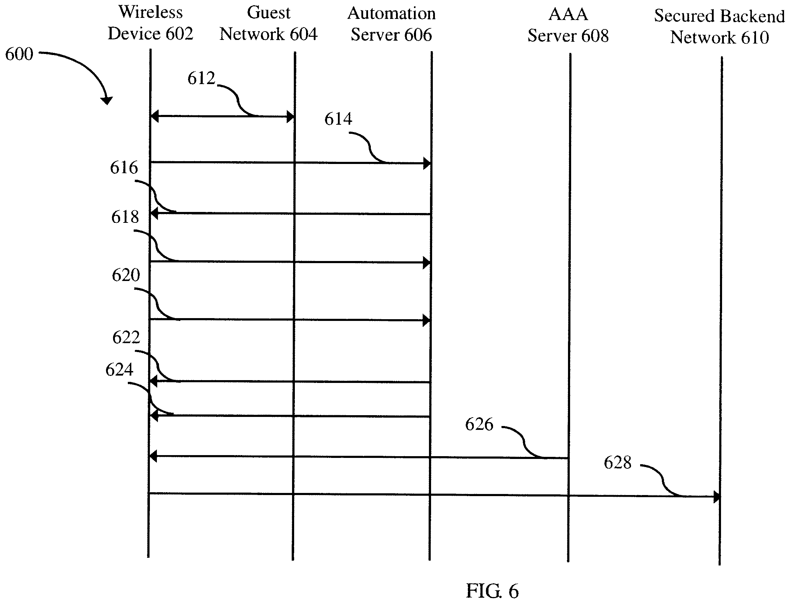

Turning now to FIG. 6, FIG. 6 is a schematic illustration of a data flow diagram 600 for automated provisioning of a wireless device in accordance with an embodiment. The data flow diagram 600 depicts the flow of requests between a wireless device 602, a network 604, an automation server 606, an AAA Server 608 and a secured backend network 610. As shown in the data flow diagram 600 initially the wireless device 602 may establish a connection by sending a request 612 to the network 604 using a SSID. The SSID may be a generic SSID, a guest SSID and an open SSID. In an embodiment an SSID and other credentials for connecting to the guest network 604 may be available to the wireless device 602. So when the wireless device 602 enters the vicinity of the guest network 602 the SSID along with the credentials may be send as part of the request 612 to a communication controller (not shown in FIG. 6) for connecting to the network 604. Thus through the communication controller and the network 604 the wireless device 602 may be connected to the automation server 606. The network 604 and the automation server 606 are connected to each other and all communications through this connection may be secure. The connections may be secured using security protocols such as, a Secure Sockets Layer Protocol (SSL) and a Transport Layer Security Protocol (TLS).

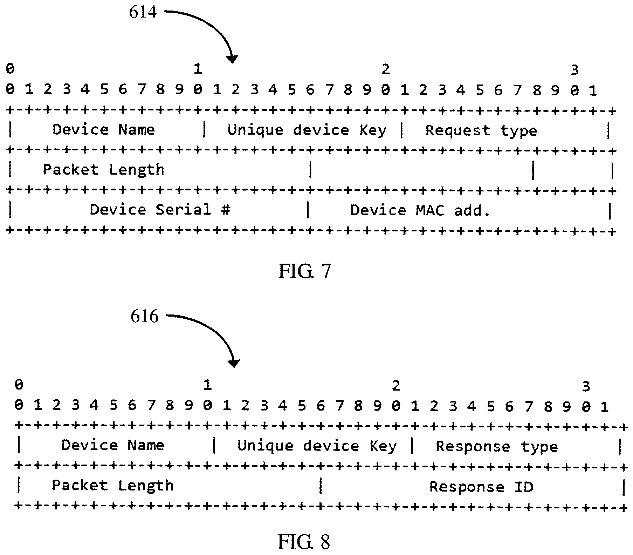

The wireless device 602 then sends a service request 614 to the automation server 606. The service request 614 may be send as a packet data. This may be achieved by encapsulating the service request 614 in various protocols such as but not limited to Transmission Control Protocol (TCP) packets and User Datagram Protocol packets. In an embodiment the service request 614 may have a packet structure as schematically illustrated in FIG. 7. The packet structure may be an application layer packet structure. As illustrated in FIG. 7 the service request 614 may include a device name, a unique device key, a request type, a packet length, a device serial number and a device MAC address. The data transmitted in a service request is explained in detail in conjunction with FIG. 3. These data present in the service request 614 enables the automation server 606 to authenticate the wireless device 602. So the automation server 606 determines whether the wireless device 602 is an authentic wireless device.

Thereafter the automation server 606 sends a service response 616 to the wireless device 602. The service response 616 may be a negative response or a positive response. A positive response indicates that the wireless device 602 is an authentic wireless device and the service request 614 is accepted. The positive response may have a packet structure as schematically illustrated in FIG. 8. The positive response may include the device name, the unique device key, a response type, the packet length and a response ID. For example a response ID may be indicated as a numerical value such as, 0. The response ID indicates that it is a positive response. Further the response type indicates the kind of response send to the wireless device 602. In this case the response type indicates that it is a service response. When the service response 616 is positive the automation server 606 establishes the connection with the wireless device 602. The connection may be a secure connection using security protocols such as but not limited to, a SSL protocol and a TLS protocol. The information associated with the security protocols used may be send to the automation server 606 using a signal 618 by the wireless device 602. Thereafter information associated with the wireless device 602 may be stored in the automation server 606. The information may be but not limited to the device name, the unique device key, the request type, the device serial number and the device MAC address received as part of the service request 614.

Now whereas a negative response indicates that the wireless device 602 is not an authentic wireless device and the service request 614 is not accepted. Thereafter the connection with the wireless device 602 may be automatically disconnected. The negative response may have a packet structure as schematically illustrated in FIG. 9. The negative response may include the device name, the unique device key, a response type, the packet length and a response ID. The response ID indicates that it is a negative response. For example a response ID may be indicated as a numerical value such as, 1. Further the response type indicates a kind of response send to the wireless device 602. In this case the response type indicates that it is a service response.

When a secure connection is established between the wireless device 602, the wireless device 602 sends a probe request 620 to the automation server 606. The probe request 620 may include information regarding wireless capabilities of the wireless device 602 and a request for a service configuration to connect to the secured backend network 610. The service configuration requested may be a configuration compatible to the wireless capabilities of the wireless device 602. A packet structure of the probe request 620 is as schematically illustrated in FIG. 10. The packet structure includes but are not limited to device name, the unique device key, a request type, a packet length, the device serial number, the device MAC address, a SSID limit, a radio protocol, a security type and a Quality of Service (QoS) type.

The SSID may be a generic SSID, a guest SSID and an open SSID as described earlier in conjunction with FIG. 2. The radio protocol may be entered as an enum value to indicate that wireless device 602 may support different communication protocols for wireless communication. The security type provides information regarding various security features supported or present in the wireless device 602. The security type may be included as an enum value in the packet structure of the service request 620. Further different QoS techniques supported by the wireless device 602 may be indicated by the QoS type.

The automation server 606 receives the probe request 620 and pre-processes the information in the packet structure as schematically illustrated in FIG. 10. The automation server 606 may perform some check operations to identity whether the wireless device 602 is capable of supporting wireless communication and using an existing wireless infrastructure, and whether a compatible service configuration is present for the wireless device 602. While performing these check operations the automation server 606 compares the information present in the probe request 620 with capabilities of the existing the wireless infrastructure and multiple service configurations available with the automation server 606 to identify a compatible service configuration.

Thereafter the automation server 606 sends a probe response such as, a probe response 622 to the wireless device 602. The probe response 622 may be send based on whether the wireless device 602 supports wireless features provided by the existing wireless infrastructure. So if the radio protocol, the security type, a frequency band and the Quality of Service (QoS) type matches with a radio protocol, a security type, a frequency band and a Quality of Service (QoS) type of the existing wireless infrastructure then the probe response 622 is send. The probe response 622 may be send along with a service configuration that needs to be configured in the wireless device 602. The service configuration once configured will enable the wireless device 602 to access the secured backend network 610.

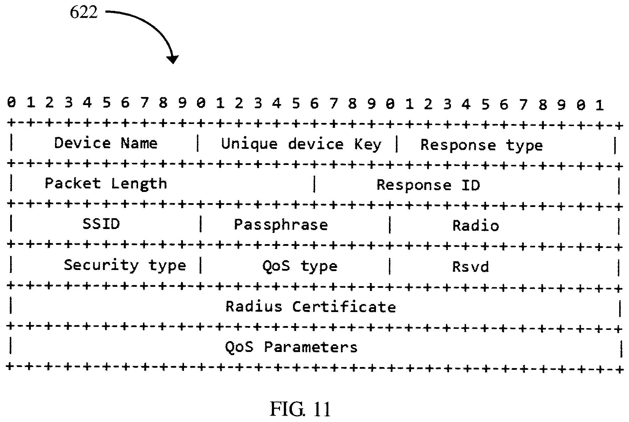

The probe response 622 may have a packet structure as schematically illustrated in FIG. 11. The packet structure as shown in FIG. 11 includes the device name, the unique device key, a response type, a packet length, a response ID, a SSID, a passphrase, a radio, a security type, a QoS type, Reserved (RSVD), a radius certificate and QoS parameters. The response type indicates that the response is a probe response. The response ID may be indicated as "Pass" representing that the automation server 606 accepted the wireless device 602 and the service configuration is transferred along with the probe response 622.

The SSID and the passphrase may be associated with the secure backend network 610. The SSID and passphrase may be required by the wireless device 602 to access the secured backend network 610. The radio included in the packet structure may indicate a protocol and a frequency band code associated with the secured backend network 610. Further the security type and the QoS type represents a security protocol and a QoS parameter associated with the secured backend network 610. The QoS parameters may be determined based on the QoS type associated with the secured backend network 610. The QoS parameters may include for example but are not limited to, throughput, jitter, dropping of packets, latency, errors, out-of-order delivery, bit error rate. Further the QoS types may include but are not limited to Wi-FI Multimedia, 802.11e, Legacy QoS and Differentiated Services Code Point (DSCP) based QoS. The Remote Authentication Dial In User Service (RADIUS) certificate indicates a networking protocol supported by the secured backend network 610. The AAA server 608 may authenticate the wireless device 602 based this certificate. A security type associated with the secured backend network 610 may define whether the AAA server 608 needs to authenticate the wireless device 602. The security type in this scenario may be an Enterprise based wireless security. However it may be appreciated that other networking protocols may be supported by a secured backend network such as, the secured backend network 610. In this scenario a certificate associated with the networking protocol may be included in the packet structure of the probe response.

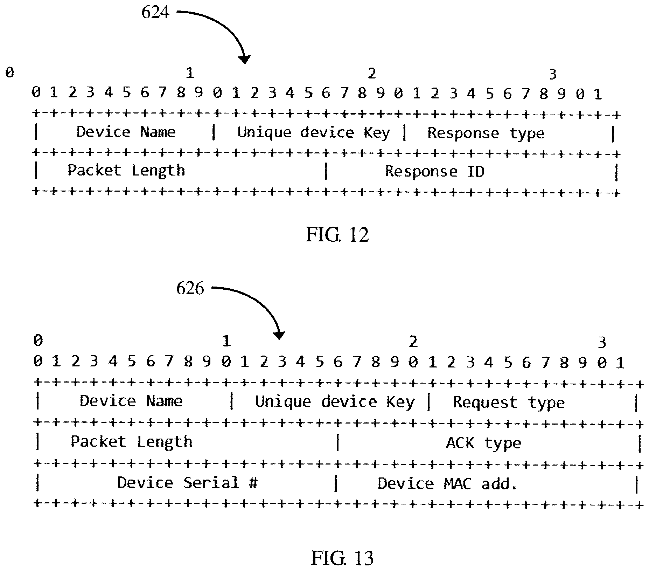

Now in case the automation server 606 finds that the wireless device 602 does not support the wireless capabilities associated with the existing wireless infrastructure then the automation server 606 sends a probe response such as probe response 624 as a negative response. In this case the probe response 624 may have a packet structure as schematically illustrated in FIG. 12. Thus the packet structure may include a response ID indicating as "Fail" in addition to other information such as, the device name and the unique device key associated with the wireless device 602, and a response type. The response type indicates that this probe response associated with the probe request received from the wireless device 602.

The wireless device 602 receives the probe response and sends an acknowledgment response 626 to the automation server 606. The wireless device 602 may analyze the probe response 622 to determine whether information present in the probe response 622 is correct. During this analysis the wireless device 602 may also check whether the service configuration received from the automation server 606 is compatible with the wireless communication capabilities of the wireless device 602. If the service configuration and the information present in the probe response 622 are found correct then the acknowledgment response 626 is sent. The acknowledgment response 626 may have a packet structure as schematically illustrated in FIG. 13. The acknowledgment response 626 as illustrated includes the device name, the unique device key, a request type, an ACK type, a packet length, the device serial number and the device MAC address. The request type indicates that this an acknowledgement to the probe response 622 received. Further the ACK type may indicate whether the response from the wireless device 602 is a positive response or a negative response. The positive response represents that the wireless device 602 identified the probe response 622 as correct and the service configuration will be configured in the wireless device 602. The positive response may be represented by enum value '0'. Whereas the negative response represents that the probe response 622 is identified as incorrect. The negative response may be represented by enum value '1'. However it may be appreciated that the positive and negative responses may be represented in any other manner known in the art.

Once the acknowledgment response 626 is received by the automation server 606, the wireless device 602 is automatically configured with the service configuration to enable the wireless device 602 to initiate a connection 626 with the secured backend network 610. Simultaneously the AAA server 608 may establish a connection 628 with the wireless device 602. Thereafter the wireless device 602 accesses the services provided by the secured backend network 610.

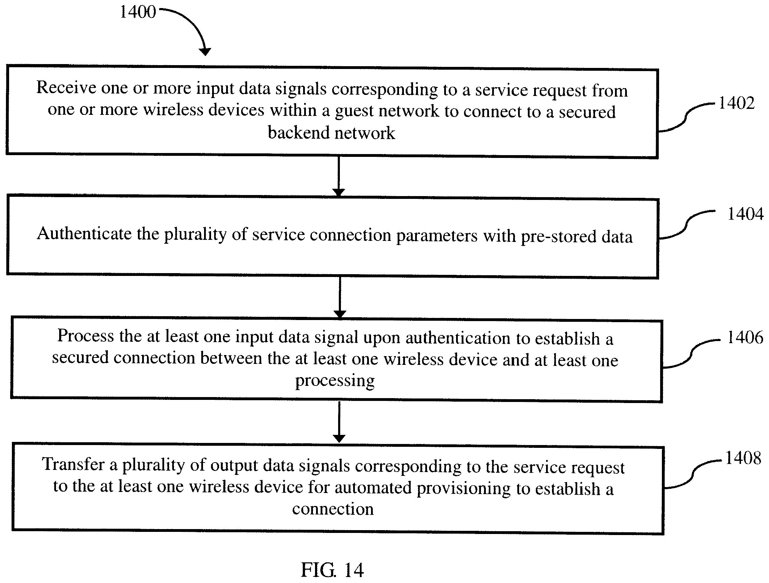

Referring now to FIG. 14 illustrating a method 1400 for automated provisioning of one or more wireless devices is disclosed in accordance with an embodiment. In this method initially one or more input data signals corresponding to a service request are received from the wireless devices at step 1402. The input data signals may include multiple service connection parameters associated with the wireless devices. The service connection parameters may include one or more device identification parameters and a request type. The device identification parameters may be for example a unique device identification key, a device serial number, a device Media Access Control (MAC) Address etc. Further the request type indicates a service that the wireless device requires. The service is for connecting the wireless device to the secured backend network. In an embodiment a service connection parameter may be length of an input data signal.

Further in an embodiment the input data signals may include one or more communication parameters associated with the wireless devices. A communication parameter may be associated with communication capability of a wireless device. The wireless devices may be located within the guest network. The input data signals may be received by one or more processing subsystems through the guest network. The service request may be for connecting to a secured backend network. The secured backend network may include for example but are not limited to a hospital network, a bank network and a private network. The wireless devices may need to connect to the secured backend network to access some of the services by the network.

The service connection parameters are authenticated with pre-stored data at step 1404. The pre-stored data includes multiple device identification parameters associated with the wireless devices, and request types. For instance one or more service connection parameters received from a wireless device include unique device identification key, a device serial number, a communication parameter and a device MAC address associated with the wireless device. These service connection parameters may be compared with multiple device identification parameters associated with each wireless device of multiple wireless devices and request types to authenticate the wireless device.

Once the wireless devices are authenticated, the input data signals are processed to establish a secure connection between the wireless devices and the one or more processing subsystems at step 1406. The process of the establishing the secure connection is explained in detail in conjunction with FIGs. 2, 3, 5 and 6.

Thereafter at step 1408 multiple output signals corresponding to the service request is transferred to the wireless devices for automated provisioning to establish a connection with the secured backend network. The output signals include one or more service configurations for automated provisioning of the wireless devices. The service configurations may identified by the one or more processing subsystems from multiple service configurations.

In order to identify the service configurations the one or more processing subsystems may determine whether the service configurations are compatible with the one or more communication parameters associated with the wireless devices. The processing subsystems may be configured to notify the wireless devices whether the service configurations are compatible with the one or more communication parameters. This explained in detail in conjunction with FIG. 2. The service configurations may be received and automatically configured in the wireless devices. Consequently the wireless devices may be connected to the secured backend network. Thus method 1400 enables the wireless devices to be automatically configured to access any network while being mobile without the need of a network administrator.

The method 1400 can be performed using a processor or any other processing device. The method steps can be implemented using coded instructions (e.g., computer readable instructions) stored on a tangible computer readable medium. The tangible computer readable medium may be for example a flash memory, a read-only memory (ROM), a random access memory (RAM), any other computer readable storage medium and any storage media. Although the method of managing an infrastructure in a virtual environment are explained with reference to the flow chart of FIG. 14, other methods of implementing the method can be employed. For example, the order of execution of each method steps may be changed, and/or some of the method steps described may be changed, eliminated, divide or combined. Further the method steps may be sequentially or simultaneously executed for automated provisioning of one or more wireless devices in a network infrastructure.

This written description uses examples to disclose the invention, including the best mode, and also to enable any person skilled in the art to practice the invention, including making and using any computing system or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

**Referral Numerals:**

| Reference Number | Description |
|---|---|
| 100 | Exemplary environment |
| 102 | Client device |
| 104, 110, 402 and 406 | Locations |
| 106, 112, 404, 408 and 504 | Servers |
| 114 | Network administrator |
| 200 | Processor |
| 202 | Processing subsystem |
| 300 | System |
| 302, 304, 306, 508, 510, 602 | Wireless Devices |
| 308, 518 | Communication controllers |
| 500 | Operating environment |
| 502, 606 | Automation server |
| 506, 608 | AAA server |
| 512, 610 | Secured backend network |
| 514, 604 | Networks |
| 516 | Router |
| 612, 614, 620 | Request, Service request, Probe Request |
| 616, 622, 624, 626 | Service Response, Probe Response, Probe Response, Acknowledgement Response |
| 618 | Signal |

Various aspects and embodiments of the present invention are defined by the following numbered clauses:
1. A processor for automated provisioning of at least one wireless device, the processor comprising:
   at least one processing sub-system communicably coupled to a guest network, wherein the at least one processing sub-system is configured to:
   receive at least one input data signal corresponding to a service request from the at least one wireless device within the guest network to connect to a secured backend network, wherein the at least one input data signal comprises a plurality of service connection parameters associated with the at least one wireless device;
   authenticate the plurality of service connection parameters with pre-stored data in at least one memory;
   process the at least one input data signal upon authentication to establish a secured communication link with the at least one wireless device; and
   transfer a plurality of output signals corresponding to the service request to the at least one wireless device for automated provisioning to establish a connection with the secured backend network.
2. The processor of clause 1, wherein the plurality of service connection parameters comprises at least one device identification parameter and a request type.
3. The processor of clause 1 or clause 2, wherein the pre-stored data comprises a plurality of device identification parameters associated with the at least one wireless device and request types.
4. The processor of any preceding clause, wherein the plurality of output signals comprises at least one service configuration for automated provisioning of the at least one wireless device.
5. The processor of any preceding clause, wherein an input data signal of the at least one input data signal comprises at least one communication parameter associated with the at least one wireless device, wherein the at least one communication parameter is associated with a wireless communication capability of the at least one wireless device.
6. The processor of any preceding clause, wherein the at least one processing subsystem is further configured to process the at least one input signal by determining whether the at least one communication parameter of the at least one wireless device is compatible with at least one service configuration comprised in the plurality of output signals.
7. The processor of any preceding clause, wherein the at least one processing subsystem is further configured to identify the at least one service configuration from a plurality of service configurations.
8. The processor of any preceding clause, wherein the at least one processing subsystem is further configured to notify whether the at least one service configuration is compatible with the at least one communication parameter to the at least one wireless device.
9. A system for automated provisioning, the system comprising:
   at least one wireless device configured to transmit at least one output data signal corresponding to a service request within a guest network, wherein the at least one output data signal comprises a plurality of service connection parameters associated with the at least one wireless device;
   a processing sub-system configured to:
      receive the at least one output data signal corresponding to the service request from the at least one wireless device to connect to a secured backend network;
      authenticate the plurality of service connection parameters with a pre-stored data stored in at least one memory;
      process the at least one output data signal upon authentication to establish a secured communication link with the at least one wireless device; and
      transfer a plurality of output signals corresponding to the service request to the at least one wireless device for automated provisioning to establish a connection with the secured backend network.
10. The system of any preceding clause, wherein the plurality of service connection parameters comprises at least one device identification parameter and a request type.
11. The system of any preceding clause, wherein the pre-stored data comprises a plurality of device identification parameters associated with the at least one wireless device and request types.
12. The system of any preceding clause further comprises a communication controller communicably connected to the processing sub-system, wherein the communication controller is configured to:
   receive a request from the at least one wireless device for connecting to the communication controller over the guest network, wherein the connection between the communication controller and the at least one wireless device is different from a connection between the communication controller and the processing sub-system; and
   process the request to establish a connection between the at least one wireless device and the processing sub-system through the communication controller.
13. The system of any preceding clause, wherein the communication controller is configured to assign one of a generic Service Set Identification (SSID), an open SSID and a guest SSID to at least one wireless device to establish the connection between the at least one wireless device and the processing sub-system, wherein at least one of the generic SSID, the open SSID and the guest SSID is associated with the guest network.
14. The system of any preceding clause, wherein the plurality of output signals comprises at least one service configuration for automated provisioning of the at least one wireless device.
15. The system of any preceding clause, wherein an output data signal of the at least one output data signal comprises at least one communication parameter associated with the at least one wireless device, wherein the at least one communication parameter is associated with a wireless communication capability of the at least one wireless device.
16. The system of any preceding clause, wherein the at least one processing subsystem is further configured to:
   process the at least one output data signal by determining whether at least one service configuration comprised in the plurality of output signals is compatible with the at least one communication parameter; and
   notify whether the at least one service configuration is compatible with the at least one communication parameter to the at least one wireless device.
17. The system of any preceding clause, wherein the at least one processing subsystem is further configured to identify the at least one service configuration from a plurality of service configurations.
18. A method of automated provisioning of at least one wireless device, the method comprising:
   receiving at least one input data signal corresponding to a service request from the at least one wireless device within a guest network to connect to a secured backend network, wherein the at least one input data signal comprises a plurality of service connection parameters associated with the at least one wireless device;
   authenticating the plurality of service connection parameters with pre-stored data;
   processing the at least one input data signal upon authentication to establish a secured communication link between the at least one wireless device and at least one processing sub-system; and
   transferring a plurality of output signals corresponding to the service request to the at least one wireless device for automated provisioning to establish a connection with the secured backend network.
19. The method of any preceding clause, wherein processing the at least one input signal comprises:
   determining whether at least one service configuration comprised in the plurality of output signals is compatible with the at least one communication parameter of the at least one wireless device comprised in the at least one input signal; and
   notifying whether the at least one service configuration is compatible with the at least one communication parameter to at least one wireless device.
20. The method of any preceding clause, wherein the plurality of output signals comprises at least one service configuration for automated provisioning of the at least one wireless device, the method further comprises identifying the at least one service configuration from a plurality of service configurations.

## Claims

1. A processor for automated provisioning of at least one wireless device (508,510), the processor comprising:
at least one processing sub-system communicably coupled to a guest network (514), wherein the at least one processing sub-system is configured to:
receive at least one input data signal corresponding to a service request from the at least one wireless device within the guest network (514) to connect to a secured backend network (512) at a different location, wherein the at least one input data signal comprises a plurality of service connection parameters associated with the at least one wireless device;
authenticate the plurality of service connection parameters with pre-stored data in at least one memory;
process the at least one input data signal upon authentication to establish a secured communication link with the at least one wireless device; and
transfer a plurality of output signals comprising at least one service configuration corresponding to the service request to the at least one wireless device for automated provisioning of the at least one wireless device to establish a connection with the secured backend network (512).

2. The processor of claim 1, wherein the plurality of service connection parameters comprises at least one device identification parameter and a request type.

3. The processor of claim 1 or claim 2, wherein the pre-stored data comprises a plurality of device identification parameters associated with the at least one wireless device and request types.

4. The processor of any preceding claim, wherein an input data signal of the at least one input data signal comprises at least one communication parameter associated with the at least one wireless device, wherein the at least one communication parameter is associated with a wireless communication capability of the at least one wireless device.

5. The processor of any preceding claim, wherein the at least one processing subsystem is further configured to process the at least one input signal by determining whether the at least one communication parameter of the at least one wireless device is compatible with at least one service configuration comprised in the plurality of output signals.

6. The processor of any preceding claim, wherein the at least one processing subsystem is further configured to identify the at least one service configuration from a plurality of service configurations.

7. The processor of any preceding claim, wherein the at least one processing subsystem is further configured to notify whether the at least one service configuration is compatible with the at least one communication parameter to the at least one wireless device.

8. A system for automated provisioning, the system comprising:
at least one wireless device configured to transmit at least one output data signal corresponding to a service request within a guest network, wherein the at least one output data signal comprises a plurality of service connection parameters associated with the at least one wireless device;
a processing sub-system configured to:
receive the at least one output data signal corresponding to the service request from the at least one wireless device to connect to a secured backend network at a different location;
authenticate the plurality of service connection parameters with a pre-stored data stored in at least one memory;
process the at least one output data signal upon authentication to establish a secured communication link with the at least one wireless device; and
transfer a plurality of output signals comprising at least one service configuration corresponding to the service request to the at least one wireless device for automated provisioning of the at least one wireless device to establish a connection with the secured backend network.

9. The system of claim 8 further comprises a communication controller communicably connected to the processing sub-system, wherein the communication controller is configured to:
receive a request from the at least one wireless device for connecting to the communication controller over the guest network, wherein the connection between the communication controller and the at least one wireless device is different from a connection between the communication controller and the processing sub-system; and
process the request to establish a connection between the at least one wireless device and the processing sub-system through the communication controller.

10. The system of claim 8 or claim 9, wherein the communication controller is configured to assign one of a generic Service Set Identification (SSID), an open SSID and a guest SSID to at least one wireless device to establish the connection between the at least one wireless device and the processing sub-system, wherein at least one of the generic SSID, the open SSID and the guest SSID is associated with the guest network.

11. A method of automated provisioning of at least one wireless device, the method comprising:
receiving at least one input data signal corresponding to a service request from the at least one wireless device within a guest network to connect to a secured backend network at a different location, wherein the at least one input data signal comprises a plurality of service connection parameters associated with the at least one wireless device;
authenticating the plurality of service connection parameters with pre-stored data;
processing the at least one input data signal upon authentication to establish a secured communication link between the at least one wireless device and at least one processing sub-system; and
transferring a plurality of output signals comprising at least one service configuration corresponding to the service request to the at least one wireless device for automated provisioning of the at least one wireless device to establish a connection with the secured backend network.

12. The method of claim 11, wherein processing the at least one input signal comprises:
determining whether at least one service configuration comprised in the plurality of output signals is compatible with the at least one communication parameter of the at least one wireless device comprised in the at least one input signal; and
notifying whether the at least one service configuration is compatible with the at least one communication parameter to at least one wireless device.

13. The method of claim 11 or claim 12, the method further comprises identifying the at least one service configuration from a plurality of service configurations.

## Patentansprüche

1. Prozessor für automatisierte Bereitstellung von mindestens einem Drahtlosgerät (508, 510), wobei der Prozessor Folgendes umfasst:
mindestens ein Verarbeitungs-Teilsystem, das kommunikativ mit einem Gastnetzwerk (514) gekoppelt ist, wobei das mindestens eine Verarbeitungs-Teilsystem für Folgendes ausgelegt ist:
Empfangen von mindestens einem Eingangsdatensignal, das einer Serviceanfrage von dem mindestens einen Drahtlosgerät innerhalb des Gastnetzwerks (514) entspricht, um eine Verbindung mit einem gesicherten Backend-Netzwerk (512) an einem anderen Ort herzustellen, wobei das mindestens eine Eingangsdatensignal eine Vielzahl von Service-Verbindungsparametern umfasst, die mit dem mindestens einen Drahtlosgerät verbunden sind;
Authentifizieren der Vielzahl von Service-Verbindungsparametern mit vorgespeicherten Daten in mindestens einem Speicher;
Verarbeiten des mindestens einen Eingangsdatensignals nach der Authentifizierung, um eine gesicherte Kommunikationsverbindung mit dem mindestens einen Drahtlosgerät einzurichten; und
Übertragen einer Vielzahl von Ausgangssignalen, die mindestens eine der Serviceanfrage entsprechende Servicekonfiguration umfassen, zu dem mindestens einen Drahtlosgerät für automatisierte Bereitstellung des mindestens einen Drahtlosgerätes, um eine Verbindung mit dem gesicherten Backend-Netzwerk (512) einzurichten.

2. Prozessor nach Anspruch 1, wobei die Vielzahl von Service-Verbindungsparametern mindestens einen Geräteidentifikationsparameter und einen Anfragetyp umfasst.

3. Prozessor nach Anspruch 1 oder Anspruch 2, wobei die vorgespeicherten Daten eine Vielzahl von Geräteidentifikationsparametern umfassen, die mit dem mindestens einen Drahtlosgerät und den Anfragetypen verbunden sind.

4. Prozessor nach einem beliebigen vorhergehenden Anspruch, wobei ein Eingangsdatensignal des mindestens einen Eingangsdatensignals mindestens einen Kommunikationsparameter umfasst, der mit dem mindestens einen Drahtlosgerät verbunden ist, wobei der mindestens eine Kommunikationsparameter mit einer Drahtloskommunikationsfähigkeit des mindestens einen Drahtlosgerätes verbunden ist.

5. Prozessor nach einem beliebigen vorhergehenden Anspruch, wobei das mindestens eine Verarbeitungs-Teilsystem ferner dazu ausgelegt ist, das mindestens eine Eingangssignal zu verarbeiten, indem es bestimmt, ob der mindestens eine Kommunikationsparameter des mindestens einen Drahtlosgerätes mit mindestens einer Servicekonfiguration, die in der Vielzahl von Ausgangssignalen enthalten ist, kompatibel ist.

6. Prozessor nach einem beliebigen vorhergehenden Anspruch, wobei das mindestens eine Verarbeitungs-Teilsystem ferner dazu ausgelegt ist, die mindestens eine Servicekonfiguration von einer Vielzahl von Servicekonfigurationen zu identifizieren.

7. Prozessor nach einem beliebigen vorhergehenden Anspruch, wobei das mindestens eine Verarbeitungs-Teilsystem ferner dazu ausgelegt ist zu melden, ob die mindestens eine Servicekonfiguration mit dem mindestens einen Kommunikationsparameter zu dem mindestens einen Drahtlosgerät kompatibel ist.

8. System für automatisierte Bereitstellung, wobei das System Folgendes umfasst:
mindestens ein Drahtlosgerät, das dazu ausgelegt ist, mindestens ein Ausgangsdatensignal, das einer Serviceanfrage innerhalb eines Gastnetzwerks entspricht, zu übertragen, wobei das mindestens eine Ausgangsdatensignal eine Vielzahl von Service-Verbindungsparametern umfasst, die mit dem mindestens einen Drahtlosgerät verbunden sind;
ein Verarbeitungs-Teilsystem, das für Folgendes ausgelegt ist:
Empfangen des mindestens einen Ausgangsdatensignals, das der Serviceanfrage von dem mindestens einen Drahtlosgerät entspricht, um eine Verbindung mit einem gesicherten Backend-Netzwerk an einem anderen Ort herzustellen;
Authentifizieren der Vielzahl von Service-Verbindungsparametern mit vorgespeicherten Daten, die in mindestens einem Speicher gespeichert sind;
Verarbeiten des mindestens einen Ausgangsdatensignals nach der Authentifizierung, um eine gesicherte Kommunikationsverbindung mit dem mindestens einen Drahtlosgerät einzurichten; und
Übertragen einer Vielzahl von Ausgangssignalen, die mindestens eine der Serviceanfrage entsprechende Servicekonfiguration umfassen, zu dem mindestens einen Drahtlosgerät für automatisierte Bereitstellung des mindestens einen Drahtlosgerätes, um eine Verbindung mit dem gesicherten Backend-Netzwerk einzurichten.

9. System nach Anspruch 8, das ferner einen Kommunikationscontroller umfasst, der kommunikativ mit dem Verarbeitungs-Teilsystem verbunden ist, wobei der Kommunikationscontroller für Folgendes ausgelegt ist:
Empfangen einer Anfrage von mindestens einem Drahtlosgerät zum Verbinden mit dem Kommunikationscontroller über das Gastnetzwerk, wobei die Verbindung zwischen dem Kommunikationscontroller und dem mindestens einen Drahtlosgerät sich von einer Verbindung zwischen dem Kommunikationscontroller und dem Verarbeitungs-Teilsystem unterscheidet; und
Verarbeiten der Anfrage zum Einrichten einer Verbindung zwischen dem mindestens einen Drahtlosgerät und dem Verarbeitungs-Teilsystem durch den Kommunikationscontroller.

10. System nach Anspruch 8 oder Anspruch 9, wobei der Kommunikationscontroller dazu ausgelegt ist, eine einer generischen Service Set Identification (SSID), einer offenen SSID und einer Gast-SSID mindestens einem Drahtlosgerät zuzuweisen, um die Verbindung zwischen dem mindestens einen Drahtlosgerät und dem Verarbeitungs-Teilsystem einzurichten, wobei mindestens eine der generischen SSID, der offenen SSID und der Gast-SSID mit dem Gastnetzwerk verbunden ist.

11. Verfahren der automatisierten Bereitstellung von mindestens einem Drahtlosgerät, wobei das Verfahren Folgendes umfasst:
Empfangen von mindestens einem Eingangsdatensignal, das einer Serviceanfrage von dem mindestens einen Drahtlosgerät innerhalb des Gastnetzwerks entspricht, um eine Verbindung mit einem gesicherten Backend-Netzwerk an einem anderen Ort herzustellen, wobei das mindestens eine Eingangsdatensignal eine Vielzahl von Service-Verbindungsparametern umfasst, die mit dem mindestens einen Drahtlosgerät verbunden sind;
Authentifizieren der Vielzahl von Service-Verbindungsparametern mit vorgespeicherten Daten;
Verarbeiten des mindestens einen Eingangsdatensignals nach der Authentifizierung, um eine gesicherte Kommunikationsverbindung zwischen dem mindestens einen Drahtlosgerät und mindestens einem Verarbeitungs-Teilsystem einzurichten; und
Übertragen einer Vielzahl von Ausgangssignalen, die mindestens eine der Serviceanfrage entsprechende Servicekonfiguration umfassen, zu dem mindestens einen Drahtlosgerät für automatisierte Bereitstellung des mindestens einen Drahtlosgerätes, um eine Verbindung mit dem gesicherten Backend-Netzwerk einzurichten.

12. Verfahren nach Anspruch 11, wobei das Verarbeiten des mindestens einen Eingangssignals Folgendes umfasst:
Bestimmen, ob mindestens eine in der Vielzahl von Ausgangssignalen enthaltene Servicekonfiguration mit dem mindestens einen Kommunikationsparameter des mindestens einen Drahtlosgerätes, der in dem mindestens einen Eingangssignal enthalten ist, kompatibel ist; und
Melden, ob die mindestens eine Servicekonfiguration mit dem mindestens einen Kommunikationsparameter zu dem mindestens einen Drahtlosgerät kompatibel ist.

13. Verfahren nach Anspruch 11 oder Anspruch 12, wobei das Verfahren ferner das Identifizieren der mindestens einen Servicekonfiguration von einer Vielzahl von Servicekonfigurationen umfasst.

## Revendications

1. Processeur pour la mise en service automatisée d'au moins un dispositif sans fil (508, 510), le processeur comprenant :
au moins un sous-système de traitement couplé en communication à un réseau pris en charge (514), dans lequel le ou les sous-systèmes de traitement sont configurés pour :
recevoir au moins un signal de données d'entrée correspondant à une demande de service venant du ou des dispositifs sans fil dans le réseau pris en charge (514) pour les connecter à un réseau principal sécurisé (512) en un emplacement différent, dans lequel le ou les signaux de données d'entrée comprennent une pluralité de paramètres de connexion de service associés au ou aux dispositifs sans fil ;
authentifier la pluralité de paramètres de connexion de service avec des données pré-stockées dans au moins une mémoire ;
traiter l'au moins un signal de données d'entrée lors de l'authentification pour établir une liaison de communication sécurisée avec le ou les dispositifs sans fil ; et
transférer une pluralité de signaux de sortie comprenant au moins une configuration de service correspondant à la demande de service destinée au ou aux dispositifs sans fil pour une mise en service automatisée du ou des dispositifs sans fil afin d'établir une connexion avec le réseau principal sécurisé (512).

2. Processeur selon la revendication 1, dans lequel la pluralité de paramètres de connexion de service comprend au moins un paramètre d'identification de dispositif et un type de demande.

3. Processeur selon la revendication 1 ou la revendication 2, dans lequel les données pré-stockées comprennent une pluralité de paramètres d'identification de dispositif associés au ou aux dispositifs sans fil et au ou aux types de demande.

4. Processeur selon l'une quelconque des revendications précédentes, dans lequel un signal de données d'entrée parmi le ou les signaux de données d'entrée comprend au moins un paramètre de communication associé au ou aux dispositifs sans fil, dans lequel le ou les paramètres de communication sont associés à une capacité de communication sans fil du ou des dispositifs sans fil.

5. Processeur selon l'une quelconque des revendications précédentes, dans lequel le ou les sous-systèmes de traitement sont en outre configurés pour traiter le ou les signaux d'entrée en déterminant si le ou les paramètres de communication du ou des dispositifs sans fil sont compatibles avec au moins une configuration de service comprise dans la pluralité de signaux de sortie.

6. Processeur selon l'une quelconque des revendications précédentes, dans lequel le ou les sous-systèmes de traitement sont en outre configurés pour identifier la ou les configurations de service parmi une pluralité de configurations de service.

7. Processeur selon l'une quelconque des revendications précédentes, dans lequel le ou les sous-systèmes de traitement sont en outre configurés pour notifier si la ou les configurations de service sont compatibles avec le ou les paramètres de communication pour le ou les dispositifs sans fil.

8. Système de mise en service automatisée, le système comprenant :
au moins un dispositif sans fil configuré pour transmettre au moins un signal de données de sortie correspondant à une demande de service dans un réseau pris en charge, dans lequel le ou les signaux de données de sortie comprennent une pluralité de paramètres de connexion de service associés au ou aux dispositifs sans fil ;
un sous-système de traitement, configuré pour :
recevoir le ou les signaux de données de sortie correspondant à une demande de service venant du ou des dispositifs sans fil pour les connecter à un réseau principal sécurisé en un emplacement différent,
authentifier la pluralité de paramètres de connexion de service avec des données pré-stockées contenues dans au moins une mémoire ;
traiter le ou les signaux de données de sortie lors de l'authentification pour établir une liaison de communication sécurisée avec le ou les dispositifs sans fil ; et
transférer une pluralité de signaux de sortie comprenant au moins une configuration de service correspondant à la demande de service destinée au ou aux dispositifs sans fil pour une mise en service automatisée du ou des dispositifs sans fil afin d'établir une connexion avec le réseau principal sécurisé.

9. Système selon la revendication 8, comprenant en outre un dispositif de contrôle de communication connecté en communication au sous-système de traitement, dans lequel le dispositif de contrôle de communication est configuré pour :
recevoir une demande du ou des dispositifs sans fil pour les connecter au dispositif de contrôle de communication sur le réseau pris en charge, dans lequel la connexion entre le dispositif de contrôle de communication et le ou les dispositifs sans fil est différente d'une connexion entre le dispositif de contrôle de communication et le sous-système de traitement ; et
traiter la demande pour établir une connexion entre le ou les dispositifs sans fil et le sous-système de traitement par l'intermédiaire du dispositif de contrôle de communication.

10. Système selon la revendication 8 ou la revendication 9, dans lequel le dispositif de contrôle de communication est configuré pour attribuer un identifiant SSID (Service Set Identification) générique et/ou un SSID ouvert et/ou un SSID pris en charge à au moins un dispositif sans fil afin d'établir la connexion entre le ou les dispositifs sans fil et le sous-système de traitement, dans lequel au moins un parmi le SSID générique, le SSID ouvert et le SSID pris en charge est associé au réseau pris en charge.

11. Procédé de mise en service automatisée d'au moins un dispositif sans fil, le procédé comprenant les étapes consistant à :
recevoir au moins un signal de données d'entrée correspondant à une demande de service provenant d'au moins un dispositif sans fil au sein d'un réseau pris en charge pour le connecter à un réseau principal sécurisé à un emplacement différent, dans lequel le ou les signaux de données d'entrée comprennent une pluralité de paramètres de connexion de service associés au ou aux dispositifs sans fil ;
authentifier la pluralité de paramètres de connexion de service avec des données pré-stockées ;
traiter le ou les signaux de données d'entrée lors de l'authentification pour établir une liaison de communication sécurisée entre le ou les dispositifs sans fil et le ou les sous-systèmes de traitement ; et
transférer une pluralité de signaux de sortie comprenant au moins une configuration de service correspondant à la demande de service destinée au ou aux dispositifs sans fil pour une mise en service automatisée du ou des dispositifs sans fil afin d'établir une connexion avec le réseau principal sécurisé.

12. Procédé selon la revendication 11, dans lequel le traitement du ou des signaux d'entrée comprend les étapes consistant à :
déterminer si au moins une configuration de service comprise dans la pluralité de signaux de sortie est compatible avec le ou les paramètres de communication du ou des dispositifs sans fil compris dans le ou les signaux d'entrée ; et
notifier si la ou les configurations de service sont compatibles avec le ou les paramètres de communication pour au moins un dispositif sans fil.

13. Procédé selon la revendication 11 ou la revendication 12, dans lequel le procédé comprend en outre l'étape consistant à identifier la ou les configurations de service parmi une pluralité de configurations de service.
